# EUROPÄISCHE PATENTSCHRIFT

(11) **EP 3 034 843 B1**
(45) Veröffentlichungstag und Bekanntmachung des Hinweises auf die Patenterteilung: **26.06.2019**
(21) Anmeldenummer: 15003534.3
(22) Anmeldetag: 11.12.2015
(51) Int. Cl.: F02D 9/06, F02B 37/02, F02B 37/18, F02B 37/22, F01L 13/06, F02D 13/04

(54) **VERFAHREN ZUM STEUERN EINER MOTORBREMSVORRICHTUNG SOWIE MOTORBREMSVORRICHTUNG**
METHOD FOR CONTROLLING AN ENGINE BRAKING DEVICE AND ENGINE BRAKING DEVICE
PROCÉDÉ DE COMMANDE D'UN DISPOSITIF DE FREIN MOTEUR ET DISPOSITIF DE FREIN MOTEUR

(30) Priorität: 15.12.2014 AT 9102014
(43) Veröffentlichungstag der Anmeldung: 22.06.2016
(73) Patentinhaber: MAN Truck & Bus Österreich AG, 4400 Steyr (AT)
(72) Erfinder: Rammer, Franz, 4493 Wolfern (AT); Kreuzriegler, André, 4462 Reichraming (AT); Klinger, Heidrun, 4400 Steyr (AT)
(74) Vertreter: Liebl, Thomas

(56) Entgegenhaltungen:
- EP-A1- 2 412 955
- DE-A1- 19 637 999
- DE-A1- 19 808 832
- DE-A1- 19 814 572

## Beschreibung

Die vorliegende Erfindung betrifft ein Verfahren zum Steuern einer Motorbremsvorrichtung für eine Brennkraftmaschine in Kraftfahrzeugen, insbesondere in Nutzfahrzeugen, gemäß dem Oberbegriff des Patentanspruchs 1, eine Motorbremsvorrichtung nach dem Oberbegriff des Anspruchs 8 sowie ein Fahrzeug nach Anspruch 14.

Es ist insbesondere bei luftverdichtenden (Diesel-) Brennkraftmaschinen in Nutzfahrzeugen bekannt, im Schubbetrieb durch eine Bremsklappe im Abgassystem einen Abgasgegendruck zu erzeugen, der eine wirkungsvolle Motorbremsung bewirkt, indem die Kolben der Brennkraftmaschine im Ausstoßtakt (Auslassventile offen) gegen diesen Abgasgegendruck arbeiten.

Um die Wirkung einer solchen Motorbremsvorrichtung deutlich zu erhöhen, ist es zum Beispiel aus der DE 10 2008 061 412 A1 bekannt, zusätzlich eine Dekompressionsbremse vorzusehen, bei der die Auslassventile überlagert zur regulären Ventilbetätigung nach dem Viertaktprinzip auch im Verdichtungstakt teilweise geöffnet sind. Die zusätzliche Bremswirkung entsteht hier durch das gedrosselte Abblasen der Verbrennungsluft in das Abgassystem.

Bei einer abgasgesteuerten Dekompressionsbremse ist die Ventilsteuerung der Auslassventile so ausgelegt, dass die Auslassventile durch den bei geschlossener Bremsklappe vorliegenden Abgasgegendruck gezielt irregulär öffnen (sogenanntes Ventilspringen) und durch einen Mechanismus bis zur nächsten regulären Ventilöffnung offengehalten werden. Das Einsetzen der Dekompressionsbremse ist dabei vom eingesteuerten Abgasgegendruck abhängig bzw. wird über diesen ausgelöst.

Die DE 198 08 832 A1 betrifft ein Verfahren zur Regelung des Ladeluftmassenstroms einer mittels Abgasturbolader mit verstellbarer Turbinengeometrie aufgeladenen Brennkraftmaschine, bei der als Regelgröße das Druckgefälle zwischen dem Ladedruck und einem auf die Turbine wirkenden Abgasdruck ermittelt wird und die Reglereinheit aus der Abweichung des Istwertes von dem Sollwert direkt ein Stellsignal für eine angleichende Stellbewegung der Turbinengeometrie erzeugt.

Ferner ist aus der EP 2 412 955 A1 ein Verfahren zur Motorbremsung bekannt. Der Motor weist hierbei einen Abgasturbolader mit einer Abgasturbine und einem Ladeluftverdichter sowie eine Vorrichtung zur Drosselung des Abgasstroms auf.

Aufgabe der Erfindung ist es, ein Verfahren und eine Motorbremsvorrichtung vorzuschlagen, mittels dem eine veränderliche Motorbremsleistung bei einer Brennkraftmaschine mit Abgasturboaufladung gezielt und präzise steuerbar bzw. regelbar ist.

Die Lösung dieser Aufgabe gelingt mit den Merkmalen der unabhängigen Ansprüche. Vorteilhafte Weiterbildungen der Erfindung sind Gegenstand der Unteransprüche.

Gemäß Anspruch 1 wird ein Verfahren zum Steuern einer Motorbremsvorrichtung für eine Brennkraftmaschine in Kraftfahrzeugen, insbesondere in Nutzfahrzeugen, vorgeschlagen, wobei die Motorbremsvorrichtung ein Ansaugsystem, ein Abgassystem, brennkraftmaschinenseitige Gaswechselventile (vorzugsweise im Viertaktprinzip gesteuerte Gaswechselventile), eine Abgasturboaufladung mittels zumindest eines in das Abgassystem und das Ansaugsystem integrierten Abgasturboladers sowie eine Motorbremseinrichtung aufweist, wobei die Motorbremseinrichtung eine wenigstens ein Auslassventil der Gaswechselventile beeinflussende, gasgesteuerte und vom Abgasgegendruck abhängige Dekompressionsbremse und eine im Abgassystem angeordnete, das Abgas rückstauende Bremsklappe aufweist. Erfindungsgemäß wird vorgeschlagen, dass im Motorbremsbetrieb das angeforderte Bremsmoment abhängig vom Ladedruck des Abgasturboladers und vom Abgasgegendruck stromauf der, vorzugsweise stromauf einer Abgasturbine des Abgasturboladers angeordneten, Bremsklappe geregelt wird. Es wurde erkannt, dass der Abgasgegendruck als sich anbietende Regelgröße zum gezielten Aktivieren der Dekompressionsbremse aufgrund der über den Ladedruck einer aufgeladenen Brennkraftmaschine sich ändernden Druckverhältnisse nicht ausreicht, um ein gezieltes Einsetzen bzw. Steuern der Dekompressionsbremse bzw. der jeweils angeforderten Bremsleistung im Motorbremsbetrieb zu gewährleisten. Erst die Verknüpfung des Abgasgegendrucks mit dem momentan vorliegenden Ladedruck stellt eine verlässliche Regelgröße zu einer präzisen Steuerung der Dekompressionsbremse dar.

Erfindungsgemäß werden als Regelgrößen wenigstens der Ladedruck (PL) und ein Differenzdruck (PD) verwendet, wobei der Differenzdruck (PD) aus dem Abgasgegendruck (PA) und dem Ladedruck (PL) als PA - PL = PD gebildet wird. Da der Mechanismus der gasdruckgesteuerten Dekompressionsbremse nicht direkt vom Abgasgegendruck, sondern vom Differenzdruck zwischen Abgasgegendruck (PA) und Ladedruck (PL) abhängig ist, gelingt es mit der erfindungsgemäßen Regelung in vorteilhafter Weise, eine präzise Steuerung der Dekompressionsbremse über den gesamten Betriebsbereich der Motorbremseinrichtung einschließlich unterschiedlicher Bremsleistungsanforderungen sicherzustellen.

Dabei kann in einer vorteilhaften Auslegung der Steuerungsparameter das Bremsmoment in einer ersten Phase mit nur gesteuerter Bremsklappe, in einer Übergangsphase mit einsetzender Dekompressionsbremse und in einer Endphase mit einer maximal möglichen Bremsleistung über die Dekompressionsbremse und die Bremsklappe geregelt werden.

Weiter kann mit einem im Motorbremsbetrieb ansteigenden Ladedruck zur Einsteuerung eines definierten Differenzdrucks auch der Abgasgegendruck PA durch ein definiert vorgegebenes, zunehmendes Schließen der, vorzugsweise stromauf einer Abgasturbine des Abgasturboladers angeordneten, Bremsklappe erhöht werden. Ferner kann der Sollwert des Ladedrucks über ein Kennfeld errechnet werden, das über der Drehzahl der Brennkraftmaschine und dem angeforderten Motorbremsmoment aufgespannt ist.

Des Weiteren kann regelungstechnisch günstig der Sollwert des Differenzdrucks über ein Hauptkennfeld, das über der Drehzahl der Brennkraftmaschine und dem Istladedruck aufgespannt ist, und ferner über ein Absenkungskennfeld, das über der Drehzahl der Brennkraftmaschine und der Motorbremsanforderung aufgespannt ist, ermittelt werden. Die Abhängigkeit des Hauptkennfeldes vom Istladedruck ist vorteilhaft, da mit einem steigenden Ladedruck auch ein steigender Differenzdruck erforderlich sein kann, um eine gasdruckgesteuerte Ventilöffnung zu bewirken. Dagegen hat das Absenkungskennfeld die Aufgabe den Differenzdruck auch bei Teilbremsmomentanforderungen zu reduzieren.

Des Weiteren wird der Differenzdruckistwert konkret bevorzugt in Abhängigkeit von dem Differenzdrucksollwert und der Stellung der Motorbremsklappe eingestellt.

Schließlich kann es vorteilhaft sein, wenn bei einer Motorbremsung über den ermittelten Ladedrucksollwert und über ein Regelorgan an der Abgasturbine ein Ladedruckistwert eingestellt wird, der wiederum im Zusammenwirken mit dem Differenzdruckwert PD die angeforderte Motorbremsleistung bzw. den Einsatz der Dekompressionsbremse gezielt beeinflusst. Das Regelorgan am Abgasturbolader kann in an sich bekannter Weise ein Bypassventil (Waste Gate) und/oder ein Strömungsleitelement eines Abgasturboladers, insbesondere ein Strömungsleitelement einer Abgasturbine mit variabler Turbinengeometrie, sein. Gegebenenfalls kann auch die Ansteuerung einer im Ansaugsystem der Brennkraftmaschine vorgesehenen Drosselklappe von Vorteil sein.

Bei einer erfindungsgemäßen Motorbremsvorrichtung ist vorgesehen, dass die Bremsklappe im Abgassystem und der Ladedruck im Ansaugsystem der Brennkraftmaschine im Motorbremsbetrieb über einen von der angeforderten Bremsleistung abhängigen Ladedruckregler und über einen, einen Differenzdruck aus Abgasgegendruck und Ladedruck bildenden Differenzdruckregler gesteuert sind. Dadurch ergeben sich die bereits vorstehend in Verbindung mit der erfindungsgemäßen Verfahrensführung beschriebenen Vorteile.

Auch bei der erfindungsgemäßen Motorbremsvorrichtung ist die Bremsklappe wiederum vorzugsweise stromauf einer Abgasturbine des Abgasturboladers angeordnet, höchst bevorzugt unmittelbar stromauf und benachbart der Abgasturbine angeordnet, und bildet somit eine die Gasbeaufschlagung der Abgasturbine (positiv) beeinflussende Strömungsleitklappe aus. Damit gelingt es nahezu ohne baulichen Mehraufwand, den einlassseitigen Ladedruck im Motorbremsbetrieb stark anzuheben und somit den für die erzielbare Bremsleistung notwendigen Massendurchsatz in der Brennkraftmaschine zu erhöhen. Die Bremsklappe erfüllt somit mehrere Funktionen gleichzeitig: Sie sorgt bevorzugt geregelt für einen ausreichenden Abgasgegendruck und zusätzlich ähnlich der Funktion einer Regelklappe bei Abgasturbinen mit variabler Turbinengeometrie für eine vorteilhafte Anströmung der Turbine bei verringertem Abgasdurchsatz und geringerer Abgasenthalpie. Konkret bewirkt dabei die stromauf der Abgasturbine (vorzugsweise unmittelbar stromauf und benachbart der Abgasturbine) angeordnete Bremsklappe im Gegensatz zu einer stromab der Abgasturbine angeordneten Bremsklappe ein höheres Druckgefälle über die Abgasturbine, wodurch, bedingt durch den dann möglichen höheren Massen- und Volumenstrom durch die Abgasturbine, der Ladedruck und der Abgasgegendruck deutlich erhöht werden kann und somit auch die Motorbremsleistung auf funktionssichere Weise ohne thermische Überlastung der Brennkraftmaschine deutlich gesteigert werden kann. Durch das Druckgefälle über die stromauf angeordnete Bremsklappe wird hierbei eine geringere Belastung der Abgasturbine bei gleichem Abgasgegendruck erzielt, was somit bei einer Steigerung des Abgasgegendrucks zur gewünschten Steigerung der Bremsleistung ohne höhere Belastung der Abgasturbine führt.

Besonders bevorzugt ist hierbei vorgesehen, dass die Bremsklappe stromauf und außerhalb, vorzugsweise unmittelbar stromauf und außerhalb, eines Turbinengehäuses einer Abgasturbine des Abgasturboladers (und damit stromauf eines turbinengehäuseseitigen Einströmkanals) angeordnet ist. Durch die Anordnung der wenigstens einen Bremsklappe stromauf und damit außerhalb eines Turbinengehäuses bzw. eines Einströmkanals der Abgasturbine bildet diese keinen Bestandteil der Abgasturbine, wodurch sich eine montageleichte Positionierung der Bremsklappe mit erhöhten konstruktiven Freiheitsgraden ergibt. Insbesondere können hier dann bauliche Eingriffe in die Abgasturbine vermieden werden und brauchen nicht eine Vielzahl unterschiedliche Turbinen für unterschiedliche Modellreihen vorgehalten werden. Gemäß einer hierzu besonders bevorzugten konkreten ersten Ausgestaltung kann die Abgasturbine, insbesondere ein Turbinengehäuse der Abgasturbine, hier dann mit einem, über wenigstens einen, vorzugsweise über mehrere, Zylinder der Brennkraftmaschine mit Abgas beaufschlagten Abgaskrümmer strömungstechnisch gekoppelt sein, wobei zwischen der Abgasturbine und dem Abgaskrümmer, insbesondere zwischen einem Turbinengehäuse der Abgasturbine und dem Abgaskrümmer, und damit unmittelbar stromauf und außerhalb eines Turbinengehäuses der Abgasturbine eine die Bremsklappe aufweisende separate Baueinheit verbaut ist, die sowohl mit dem Turbinengehäuse als auch mit dem Abgaskrümmer fest verbunden ist. Baulich besonders kompakt und vorteilhaft ist gemäß einer zweiten konkreten Ausführungsvariante vorgesehen, dass die Abgasturbine bzw. ein Abgasturbinengehäuse des Abgasturboladers unmittelbar an einen über wenigstens einen, vorzugsweise über mehrere, Zylinder der Brennkraftmaschine mit Abgas beaufschlagten Abgaskrümmer angebaut ist, wobei die Bremsklappe im Bereich des Abgaskrümmers und damit unmittelbar stromauf und außerhalb eines Turbinengehäuses der Abgasturbine angeordnet ist.

Des Weiteren ist gemäß einer besonders bevorzugten Ausgestaltung ein den Ladedruck im Ansaugsystem beeinflussendes Steuerorgan vorgesehen. Das den Ladedruck im Ansaugsystem beeinflussende Steuerorgan kann zum Beispiel ein an der Abgasturbine des Abgasturboladers vorgesehenes Bypassventil und/oder ein Strömungsleitelement einer Abgasturbine, insbesondere ein Strömungsleitelement einer Abgasturbine mit variabler Turbinengeometrie, und/oder eine Drosselklappe im Ansaugsystem der Brennkraftmaschine sein.

Schließlich können die Sollwerte des Ladedruckreglers und/oder des Differenzdruckreglers in Kennfeldern abgelegt sein, die abhängig zumindest von der Drehzahl der Brennkraftmaschine, von der Bremsleistungsanforderung und von Druckwerten des Ladedrucks im Ansaugsystem und des Abgasgegendrucks im Abgassystem der Brennkraftmaschine abgeleitet sind.

Auch wenn die Erfindung vorstehend stets in Verbindung mit einer Bremsklappe erläutert worden ist, ist dieser Begriff "Bremsklappe" ausdrücklich in einem weiten und umfassenden Sinne zu verstehen und nicht nur auf schwenkbare Klappenanordnung beschränkt. So sollen von dem Begriff "Bremsklappe", sofern dies nicht anders erläutert ist, ausdrücklich auch jedwede andere geeignete und/oder nicht schwenkbare Drosseleinrichtungen, wie zum Beispiel Schieber oder Drehschieber, umfasst sein.

Bezüglich der sich mit der erfindungsgemäßen Verfahrensführung und dem erfindungsgemäßen Fahrzeug ergebenden Vorteile wird auf die zuvor gemachten Ausführungen verwiesen.

Ein Ausführungsbeispiel der Erfindung ist mit Bezug auf die anhängende, schematische Zeichnung näher dargelegt. Es zeigen:
- Fig. 1: in nur skizzenhafter, vereinfachter Darstellung eine Brennkraftmaschine für ein Nutzfahrzeug mit einem Ansaugsystem, einem Abgassystem, einem Abgasturbolader und einer Motorbremsvorrichtung mit einer gasgesteuerten Dekompressionsbremse und einer Bremsklappe stromauf der Abgasturbine, wobei die Einrichtungen über ein elektronisches Motorsteuergerät mit einem Ladedruckregler und einem Differenzdruckregler im Motorbremsbetrieb gesteuert sind;
- Fig. 2: ein vereinfachtes Blockschaltbild der Regelung der Motorbremsvorrichtung nach Fig. 1 mit dem Ladedruckregler und dem Differenzdruckregler zur Einsteuerung eines definierten Abgasgegendrucks;
- Fig. 3: eine Grafik der über die Regelung nach Fig. 2 steuerbaren bzw. einregelbaren Bremsleistung der Brennkraftmaschine über der Drehzahl;
- Fig. 4: eine skizzenhafte Darstellung der Bildung des Ladedrucksollwerts im Ladedruckregler; und
- Fig. 5: eine weitere, skizzenhafte Darstellung der Bildung des Differenzdrucksollwerts im Differenzdruckregler zur Steuerung der Motorbremseinrichtung nach den Fig. 1 und 2.

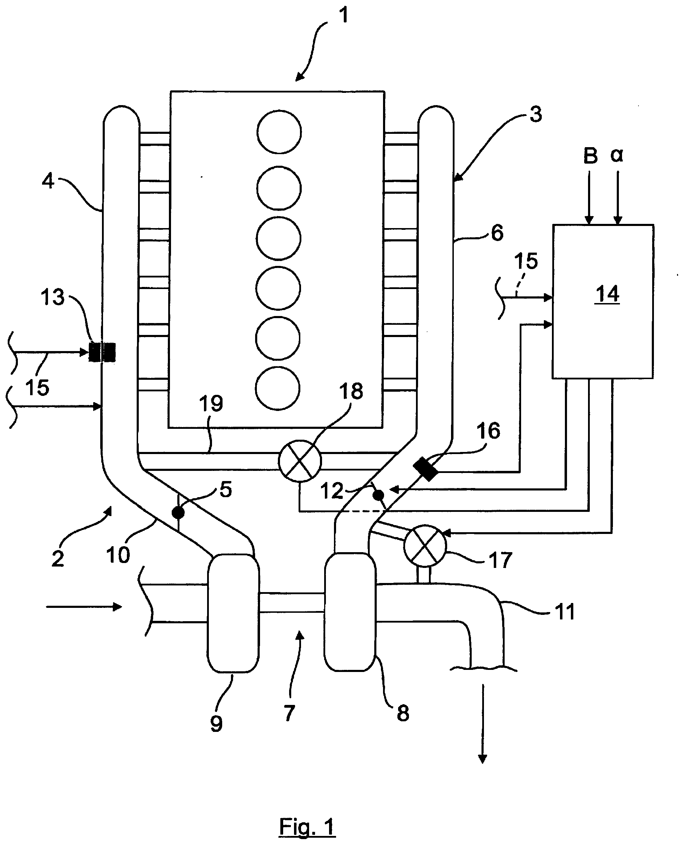

In der Fig. 1 ist nur skizzenhaft eine Brennkraftmaschine 1 (zum Beispiel eine Sechszylinder-Diesel-Brennkraftmaschine) insbesondere für ein Nutzfahrzeug dargestellt, mit einem Ansaugsystem 2 und einem Abgassystem 3 (soweit nicht beschrieben üblicher Bauart). Im Ansaugkrümmer 4 des Ansaugsystems 2 kann gegebenenfalls eine Drosselklappe 5 vorgesehen sein.

Das Abgassystem 3 weist einen an die Brennräume der Brennkraftmaschine 1 angeschlossenen Abgaskrümmer 6 auf, der mittelbar oder unmittelbar an die Abgasturbine 8 eines Abgasturboladers 7 angeschlossen ist. Die Abgasturbine 8 treibt in bekannter Weise einen Verdichter 9 an, der wiederum über eine Leitung 10 mit dem Ansaugkrümmer 4 verbunden ist und der Verbrennungsluft unter einem definierten Ladedruck PL zu den Brennräumen der Brennkraftmaschine 1 fördert. Das abströmende Abgas über den Abgaskrümmer 6 und die Abgasturbine 8 wird über eine Abgasleitung 11 weiter abgeführt. Die weiteren Leitungen des Ansaugsystems 2 und des Abgassystems 3 der Brennkraftmaschine 1 im Kraftfahrzeug sind nicht dargestellt.

Als Motorbremsvorrichtung weist die Brennkraftmaschine 1 eine Dekompressionsbremse (nicht dargestellt) auf, die auf die Gaswechselventile bzw. die Auslassventile der Brennkraftmaschine 1 wirkt. Ferner ist eine Bremsklappe 12 stromauf der Abgasturbine 8 vorgesehen, mittels der ein definierter Abgasgegendruck PA erzeugt werden kann.

Die Dekompressionsbremse kann in bekannter Weise gasgesteuert über den erhöhten Abgasgegendruck PA bei zumindest teilweise geschlossener Bremsklappe 12 initiiert werden, bei dem gezielt ein "Flattern" oder "Ventilspringen" der Auslassventile ausgelöst wird (zum Beispiel DE 10 2008 061 412 A1).

Hinsichtlich der detaillierten Ausführung der abgasgesteuerten Dekompressionsbremse wird hilfsweise auf die genannte Veröffentlichungen verwiesen.

Im Ansaugkrümmer 4 ist des Weiteren ein Ladedrucksensor 13 angeordnet, mittels dem der Ladedruck PL erfasst und einem noch zu beschreibenden Motorsteuergerät 14 über eine Signalleitung 15 zugeführt wird. Ferner ist im Abgaskrümmer 6 ein stromauf der Bremsklappe 12 den Abgasgegendruck PA messender Drucksensor 16 eingesetzt, dessen Werte ebenfalls über eine Signalleitung zum Steuergerät 14 geführt sind.

Zudem wird dem Steuergerät 14 ein bei Einleitung einer Motorbremsung im Schubbetrieb des Nutzfahrzeugs entsprechendes Signal B und ein Lastsignal α zugeführt. Das Signal B wird mittels eines eine veränderliche Motorbremsleistung anfordernden Motorbremsmanagements (nicht dargestellt) abgegeben.

Das Steuergerät 14 steuert ein Bypassventil 17 an der Abgasturbine 8 des Abgasturboladers 7 und ein Abgasrückführventil 18 in einer zwischen dem Ansaugsystem 2 und dem Abgassystem 3 angeordneten Leitung 19, basiert auf betriebsspezifische Vorgaben zur Motorleistung und zu Abgasemissionen der Brennkraftmaschine 1.

Das elektronische Steuergerät 14 ist neben den bekannten Funktionen im befeuerten Antriebsbetrieb der Brennkraftmaschine 1 so modifiziert, dass es bei erkanntem Schubbetrieb und bei Vorliegen eines Motorbremssignals B die Bremsklappe 12 mehr oder minder zur Einsteuerung eines definierten Abgasgegendrucks PA schließt und ferner den Ladedruck PL steuert.

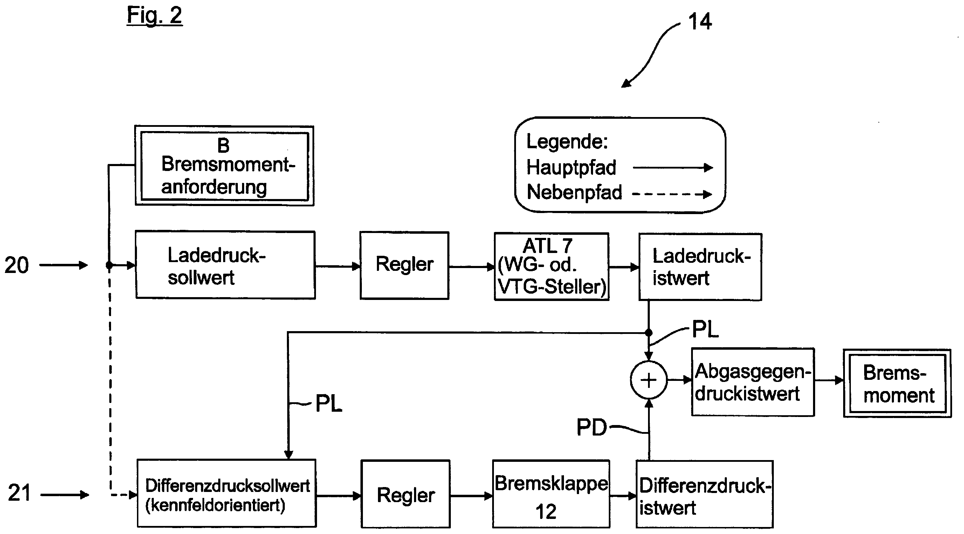

Dazu sind im Steuergerät 14 (Fig. 2) vereinfacht dargestellt ein Ladedruckregler 20 und ein Differenzdruckregler 21 vorgesehen, die im Motorbremsbetrieb B die Bremsleistung durch Ansteuerung der Bremsklappe 12 und der Steuerorgane (Bypassventil 17 zur Verminderung des Ladedrucks PL und/oder eine Strömungsleitklappe zur Erhöhung des Ladedrucks und/oder die Drosselklappe 5 im Ansaugsystem 2) bestimmen.

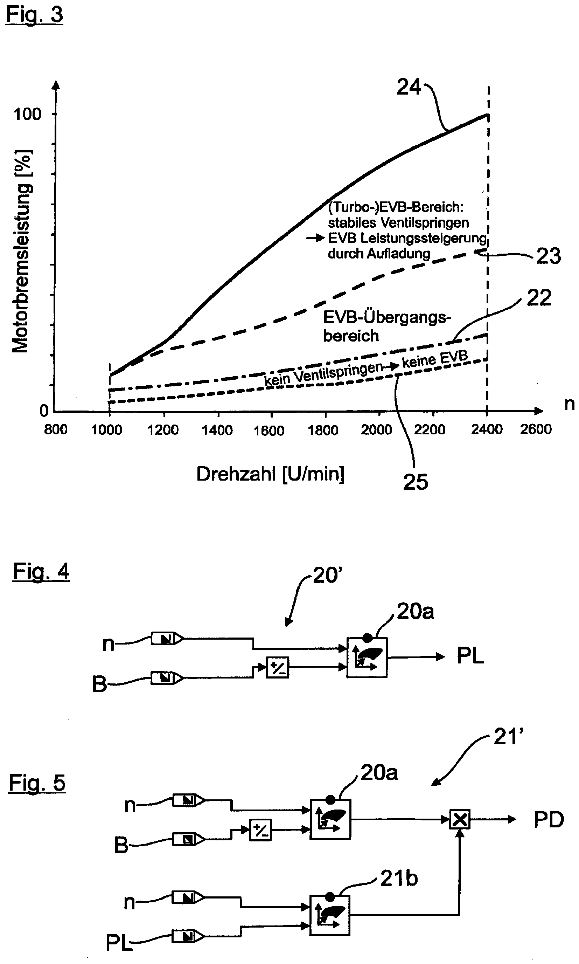

Die Fig. 4 zeigt schematisch eine Ladedrucksollwertbildung 20' in Verbindung mit dem hier nicht weiter dargestellten Ladedruckregler 20. Hierbei wird bevorzugt über ein Kennfeld 20a (nur angedeutet), welches über der Drehzahl n der Brennkraftmaschine und dem angeforderten Bremsmoment B aufgespannt ist, der Ladedrucksollwert bestimmt. Durch Steuerungseingriff auf eines oder mehrerer der besagten Steuerorgane wird der Ladedruckistwert PL eingestellt.

Die Fig. 5 zeigt eine Differenzdrucksollwertbildung 21' in Verbindung mit dem hier nicht weiter dargestellten Differenzdruckregler 20, bei der bevorzugt zwei Kennfelder 21a, 21b vorgesehen sind, die zur Bildung des Differenzdrucks PD mathematisch (steuerungstechnisch bzw. elektronisch) verknüpft sind.

Wie in Fig. 5 dargestellt, wird dabei über das Hauptkennfeld 21b, aufgespannt über der Drehzahl n und dem Ladedruckistwert PL, ein Differenzdrucksollwert gebildet. Ferner wird über das Absenkungskennfeld 21a, aufgespannt über der Drehzahl n und der Bremsmomentanforderung B, der Differenzdruck PD bei Teilbremsmomentanforderungen über definierte Faktoren reduziert.

Durch Auswertung der so gebildeten Druckwerte PL und PD gelingt es, den für die Motorbremsleistung relevanten Abgasgegendruck PA präzise derart einzustellen, dass wie in Fig. 3 über der Motordrehzahl n dargestellt eine untere Kurve 22 für geringere Motorbremsleistung bei nicht aktivierter Dekompressionsbremse, eine mittlere Kurve 23 für einen Übergangsbereich mit einsetzender Dekompressionsbremse und eine obere Kurve 24 für eine möglichst hohe Motorbremsleistung gezielt gesteuert bzw. eingeregelt werden kann, ebenso wie selbstverständlich auch Zwischenbereiche zwischen den einzelnen Kurven gezielt gesteuert bzw. eingeregelt werden können. Die unterste Kurve 25 stellt hier die Schleppleistung dar, mit der die Brennkraftmaschine bei vollständig geöffneter Bremsklappe geschleppt wird.

Die Abhängigkeit des Sollabgasgegendrucks PA vom Ladedruckistwert PL stellt sicher, dass mit steigendem Ladedruck PL auch der Differenzdruck PD erhöht ist, wodurch die gasgesteuerte Ventilöffnung der Auslassventile prozesssicher gewährleistet ist. Ferner ist der Übergangsbereich von nur Abgasrückstau über die Bremsklappe 12 auf zusätzlich die Dekompressionsbremse besser beherrschbar, wobei die unterschiedlichen Druckverhältnisse im Gaswechsel der Brennkraftmaschine 1 im Motorbremsbetrieb verbessert berücksichtigt sind.

Der Ladedruck PL im Motorbremsbetrieb B kann durch die Steuerorgane zur Einsteuerung des Ladedruckistwerts abhängig von der angeforderten Bremsleistung vermindert (zum Beispiel im Bereich der Kurve 22 in Fig. 3) oder erhöht sein (zum Beispiel Kurve 24 der Fig. 3). Dies wird, wie vorstehend angeführt, erreicht durch Ansteuerung der Drosselklappe 5 im Ansaugsystem 2 und/oder des Bypassventils 17 am Abgasturbolader 7 und/oder zum Beispiel durch Ansteuern einer Strömungsleitklappe stromauf der Abgasturbine 8. Gegebenenfalls könnte die Bremsklappe 12 auch in Verbindung mit einer Strömungsleitklappe bei einem Abgasturbolader 7 mit variabler Turbinengeometrie eingesetzt werden.

Die Erfindung ist nicht auf das dargestellte Ausführungsbeispiel beschränkt. Zum Beispiel könnte die Brennkraftmaschine 1 auch mit einer Registeraufladung mit zwei hintereinander angeordneten Abgasturboladern 7 ausgeführt sein, von denen einer als Hochdruckstufe und der zweite als Niederdruckstufe geschaltet sein können.

**Bezugszeichenliste**

| | | | |
|---|---|---|---|
| 1 | Brennkraftmaschine | 20a | Kennfeld |
| 2 | Ansaugsystem | 21 | Differenzdruckregler |
| 3 | Abgassystem | 21a | Kennfeld |
| 4 | Ansaugkrümmer | 21b | Kennfeld |
| 5 | Drosselklappe | 22 bis 24 | Bremsleistungskurven |
| 6 | Abgaskrümmer | 25 | Schleppleistungskurve |
| 7 | Abgasturbolader | 20' | Ladedrucksollwertbildung |
| 8 | Abgasturbine | | |
| 9 | Verdichter | | |
| 10 | Ansaugleitung | 21' | Differenzdrucksollwertbildung |
| 11 | Abgasleitung | | |
| 12 | Bremsklappe | | |
| 13 | Ladedrucksensor | | |
| 14 | Steuergerät | | |
| 15 | Signalleitung | | |
| 16 | Drucksensor | | |
| 17 | Bypassventil | | |
| 18 | Abgasrückführventil | | |
| 19 | Leitung | | |
| 20 | Ladedruckregler | | |

## Patentansprüche

1. Verfahren zum Steuern einer Motorbremsvorrichtung für eine Brennkraftmaschine (1) in Kraftfahrzeugen, wobei die Motorbremsvorrichtung ein Ansaugsystem (2), ein Abgassystem (3), brennkraftmaschinenseitige Gaswechselventile, eine Abgasturboaufladung mittels zumindest eines in das Abgassystem (3) und das Ansaugsystem (2) integrierten Abgasturboladers (7) sowie eine Motorbremseinrichtung aufweist, wobei die Motorbremseinrichtung eine wenigstens ein Auslassventil der Gaswechselventile beeinflussende, gasgesteuerte und vom Abgasgegendruck abhängige Dekompressionsbremse und eine im Abgassystem (3) angeordnete, das Abgas rückstauende Bremsklappe (12) aufweist, wobei im Motorbremsbetrieb das angeforderte Bremsmoment (B) abhängig vom Ladedruck (PL) des Abgasturboladers (7) und vom Abgasgegendruck (PA) stromauf der Bremsklappe (12) geregelt wird, **dadurch gekennzeichnet, dass** als Regelgrößen wenigstens der Ladedruck (PL) und ein Differenzdruck (PD) verwendet werden, wobei der Differenzdruck (PD) aus dem Abgasgegendruck (PA) und dem Ladedruck (PL) gebildet wird.

2. Verfahren nach Anspruch 1, **dadurch gekennzeichnet, dass** das Bremsmoment in einer ersten Phase (22) mit nur gesteuerter Bremsklappe (12), in einer Übergangsphase (23) mit einsetzender Dekompressionsbremse und in einer Endphase mit einem maximal möglichen Bremsmoment (24) über die Dekompressionsbremse und die Bremsklappe (12) geregelt wird.

3. Verfahren nach einem der vorhergehenden Ansprüche, **dadurch gekennzeichnet, dass** mit einem im Motorbremsbetrieb ansteigenden Ladedruck (PL) zur Einsteuerung eines definierten Differenzdrucks (PD) auch der Abgasgegendruck (PA) durch ein definiert vorgegebenes, zunehmendes Schließen der, vorzugsweise stromauf einer Abgasturbine (8) des Abgasturboladers (7) angeordneten, Bremsklappe (12) erhöht wird.

4. Verfahren nach einem der vorhergehenden Ansprüche, **dadurch gekennzeichnet, dass** der Sollwert des Ladedrucks (PL) über ein Kennfeld (20a) errechnet wird, das über der Drehzahl (n) der Brennkraftmaschine (1) und dem angeforderten Motorbremsmoment (B) aufgespannt ist.

5. Verfahren nach einem der vorhergehenden Ansprüche, **dadurch gekennzeichnet, dass** der Sollwert des Differenzdrucks (PD) über ein Hauptkennfeld (21b), das über der Drehzahl (n) der Brennkraftmaschine (1) und dem Istladedruck (PL) aufgespannt ist, und über ein Absenkungskennfeld (21a), das über der Drehzahl (n) der Brennkraftmaschine (1) und der Motorbremsanforderung (B) aufgespannt ist, ermittelt wird.

6. Verfahren nach einem der vorhergehenden Ansprüche, **dadurch gekennzeichnet, dass** der Differenzdruckistwert in Abhängigkeit von dem Differenzdrucksollwert und der Stellung der Motorbremsklappe (12) eingestellt wird.

7. Verfahren nach einem der vorhergehenden Ansprüche, **dadurch gekennzeichnet, dass** bei einer Motorbremsung über den ermittelten Ladedrucksollwert (PL) und über wenigstens ein Regelorgan (17, 5) an der Abgasturbine (8) und/oder im Ansaugsystem (2) der Ladedruckistwert eingestellt wird.

8. Motorbremsvorrichtung für eine Brennkraftmaschine in Kraftfahrzeugen, wobei die Motorbremsvorrichtung ein Ansaugsystem (2), ein Abgassystem (3), brennkraftmaschinenseitige Gaswechselventile, eine Abgasturboaufladung mittels zumindest eines in das Abgassystem (3) und das Ansaugsystem (2) integrierten Abgasturboladers (7), sowie eine Motorbremseinrichtung aufweist, und wobei die Motorbremseinrichtung eine wenigstens ein Auslassventil der Gaswechselventile beeinflussende, gasgesteuerte und vom Abgasgegendruck abhängige Dekompressionsbremse und eine im Abgassystem (3) angeordnete, das Abgas rückstauende Bremsklappe aufweist, **dadurch gekennzeichnet, dass** die Bremsklappe (12) im Abgassystem (3) und der Ladedruck (PL) im Ansaugsystem (2) der Brennkraftmaschine (1) im Motorbremsbetrieb (B) über einen von der angeforderten Bremsleistung abhängigen Ladedruckregler (20) und über einen, einen Differenzdruck (PD) aus Abgasgegendruck (PA) und Ladedruck (PL) bildenden Differenzdruckregler (21) gesteuert sind.

9. Motorbremsvorrichtung nach Anspruch 8, **dadurch gekennzeichnet, dass** die Bremsklappe (12) stromauf einer Abgasturbine (8) des Abgasturboladers (7) angeordnet ist.

10. Motorbremsvorrichtung nach Anspruch 8 oder 9, **dadurch gekennzeichnet, dass** wenigstens ein den Ladedruck im Ansaugsystem beeinflussendes Steuerorgan (5, 17) vorgesehen ist.

11. Motorbremsvorrichtung nach Anspruch 10, **dadurch gekennzeichnet, dass** das den Ladedruck (PL) im Ansaugsystem (2) beeinflussende Steuerorgan am Abgasturbolader (7) ein Bypassventil (17) und/oder ein Strömungsleitelement einer Abgasturbine (8), insbesondere ein Strömungsleitelement einer Abgasturbine (8) mit variabler Turbinengeometrie, ist.

12. Motorbremsvorrichtung nach Anspruch 10 oder 11, **dadurch gekennzeichnet, dass** das den Ladedruck (PL) beeinflussende Steuerorgan eine Drosselklappe (5) im Ansaugsystem (2) der Brennkraftmaschine (1) ist.

13. Motorbremsvorrichtung nach einem der Ansprüche 8 bis 12, **dadurch gekennzeichnet, dass** die Sollwerte des Ladedruckreglers (20) und/oder des Differenzdruckreglers (21) in Kennfeldern (20a, 21a, 21b) abgelegt sind, die abhängig von zumindest der Drehzahl (n) der Brennkraftmaschine (1) und/oder der Bremsleistungsanforderung (B) und/oder von Druckwerten des Ladedrucks (PL) im Ansaugsystem (2) gebildet sind.

14. Fahrzeug mit einer Motorbremsvorrichtung nach einem der Ansprüche 8 bis 13.

## Claims

1. Method for controlling an engine brake device for an internal combustion engine (1) in motor vehicles, wherein the engine brake device has an intake system (2), an exhaust system (3), internal-combustion-engine-side gas exchange valves, an exhaust gas turbocharging facility by means of at least one exhaust gas turbocharger (7) which is integrated into the exhaust system (3) and the intake system (2), and an engine brake device, wherein the engine brake device has a gas-controlled decompression brake, which influences at least one outlet valve of the gas exchange valves and is dependent on the exhaust gas back pressure, and a brake flap (12) which is arranged in the exhaust system (3) and causes the exhaust gas to back up, wherein in the engine brake mode the braking torque (B) which is requested is regulated as a function of the charge pressure (PL) of the exhaust gas turbocharger (7) and of the exhaust gas back pressure (PA) upstream of the brake flap (12), **characterized in that** at least the charge pressure (PL) and a differential pressure (PD) are used as regulating variables, wherein the differential pressure (PD) is formed from the exhaust gas back pressure (PA) and the charge pressure (PL).

2. Method according to Claim 1, **characterized in that** the braking torque is regulated in a first phase (22) with only a controlled brake flap (12), in a transition phase (23) with a deploying decompression brake, and in an end phase with a maximum possible braking torque (24) by means of the decompression brake and the brake flap (12).

3. Method according to one of the preceding claims, **characterized in that**, with a charge pressure (PL), rising in the engine brake mode, for applying a defined differential pressure (PD), the exhaust gas back pressure (PA) is also increased by increasing closing, which is prescribed in a defined fashion, of the brake flap (12), which is preferably arranged upstream of an exhaust gas turbine (8) of the exhaust gas turbocharger (7).

4. Method according to one of the preceding claims, **characterized in that** the setpoint value of the charge pressure (PL) is calculated by means of a characteristic diagram (20a) which is made to extend over the rotational speed (n) of the internal combustion engine (1) and the requested engine brake torque (B).

5. Method according to preceding claims, **characterized in that** the set point value of the differential pressure (PD) is determined by means of a main characteristic diagram (21b) which is made to extend over the rotational speed (n) of the internal combustion engine (1) and the actual charge pressure (PL), and by means of a reduction characteristic diagram (21a) which is made to extend over the rotational speed (n) of the internal combustion engine (1) and the engine brake torque (B).

6. Method according to one of the preceding claims, **characterized in that** the differential pressure actual value is set up as a function of the differential pressure set point value and the setting of the engine brake flap (12).

7. Method according to one of the preceding claims, **characterized in that** in the case of engine brake the charge pressure actual value is set by means of the determined charge pressure set point value (PL) and by means of at least one regulating element (17, 5) on the exhaust gas turbine (8) and/or in the intake system (2).

8. Engine brake device for an internal combustion engine in motor vehicles, wherein the engine brake device has an intake system (2), an exhaust system (3), internal-combustion-engine-side gas exchange valves, an exhaust gas turbocharging facility by means of at least one exhaust gas turbocharger (7) which is integrated into the exhaust system (3) and the intake system (2), and an engine brake device, and wherein the engine brake device has a gas-controlled decompression brake, which influences at least one outlet valve of the gas exchange valves and is dependent on the exhaust gas back pressure, and a brake flap which is arranged in the exhaust system (3) and causes the exhaust gas to back up, **characterized in that** the brake flap (12) in the exhaust system (3) and the charge pressure (PL) in the intake system (2) of the internal combustion engine (1) are controlled in the engine brake mode (B) by means of a charge pressure regulator (20) which is dependent on the requested braking power and by means of a differential pressure regulator (21) which forms a differential pressure (PD) from the exhaust gas back pressure (PA) and the charge pressure (PL).

9. Engine brake device according to Claim 8, **characterized in that** the brake flap (12) is arranged upstream of an exhaust gas turbine (8) of the exhaust gas turbocharger (7).

10. Engine brake device according to Claim 8 or 9, **characterized in that** at least one control element (5, 17) which influences the charge pressure in the intake system is provided.

11. Engine brake device according to Claim 10, **characterized in that** the control element, which influences the charge pressure (PL) in the intake system (2), on the exhaust gas turbocharger (7) is a bypass valve (17) and/or a flow-directing element of an exhaust gas turbine (8), in particular a flow-directing element of an exhaust gas turbine (8) with variable turbine geometry.

12. Engine brake device according to Claim 10 or 11, **characterized in that** the control element which influences the charge pressure (PL) is a throttle valve (5) in the intake system (2) of the internal combustion engine (1).

13. Engine brake device according to one of Claims 8 to 12, **characterized in that** the set point values of the charge pressure regulator (20) and/or of the differential pressure regulator (21) are stored in characteristic diagrams (20a, 21a, 21b) which are formed as a function of at least the rotational speed (n) of the internal combustion engine (1) and/or of the braking power request (B) and/or of pressure values of the charge pressure (PL) in the intake system (2).

14. Vehicle having an engine brake device according to one of Claims 8 to 13.

## Revendications

1. Procédé de commande d'un ensemble de frein moteur pour un moteur (1) à combustion interne, l'ensemble de frein moteur présentant un système d'aspiration (2), un système (3) de gaz d'échappement, des soupapes de changement des gaz prévues sur le moteur à combustion interne, une suralimentation entraînée par les gaz d'échappement au moyen d'au moins un turbocompresseur (7) intégré dans le système (3) de gaz d'échappement et le système d'aspiration (2) ainsi qu'un dispositif de frein moteur,
le dispositif de frein moteur présentant un frein à décompression agissant sur au moins une soupape d'échappement des soupapes de changement de gaz, asservi à la contre-pression exercée par les gaz d'échappement et dépendant de cette dernière, ainsi qu'un clapet de freinage (12) disposé dans le système (3) de gaz d'échappement et retenant les gaz d'échappement,
le couple de freinage (B) demandé lorsque le moteur fonctionne en frein moteur étant régulé en fonction de la pression de suralimentation (PL) du turbocompresseur (7) et de la contre-pression (PA) exercée par les gaz d'échappement en amont du clapet de freinage (12),
**caractérisé en ce que**
les grandeurs de réglage utilisée sont au moins la pression de suralimentation (PL) et une différence de pression (PD), la différence de pression (PD) étant formée entre la contre-pression (PA) exercée par les gaz d'échappement et la pression de suralimentation (PL).

2. Procédé selon la revendication 1, **caractérisé en ce que** dans une première phase (22) dans laquelle seul le clapet de freinage (12) est asservi, dans une phase de transition dans laquelle le frein à décompression est utilisé et dans une phase finale dans laquelle le couple de freinage (24) est au maximum possible, la régulation s'effectue par l'intermédiaire du frein à décompression et du clapet de freinage (12).

3. Procédé selon l'une des revendications précédentes, **caractérisé en ce que** lorsque la pression de suralimentation (PL) augmente pendant le fonctionnement en frein moteur, pour introduire une différence de pression (PD) définie, la contre-pression (PA) exercée par les gaz d'échappement est également augmentée par une fermeture croissante définie de manière prédéterminée du clapet de freinage (12) disposé de préférence en amont d'une turbine (8) à gaz d'échappement du turbocompresseur (7).

4. Procédé selon l'une des revendications précédentes, **caractérisé en ce que** la valeur de consigne de la pression de suralimentation (PL) est calculée à partir d'un champ de caractéristiques (20a) qui s'étend sur le régime de rotation (n) du moteur (1) à combustion interne et le couple (B) de frein moteur demandé.

5. Procédé selon l'une des revendications précédentes, **caractérisé en ce que** la valeur de consigne de la différence de pression (PD) est déterminé à partir d'un champ principal de caractéristiques (20b) qui s'étend sur le régime de rotation (n) du moteur (1) à combustion interne et la pression de suralimentation (PL) effective et d'un champ d'abaissement des caractéristiques qui s'étend sur le régime de rotation (n) du moteur (1) à combustion interne et la demande (B) de freinage moteur.

6. Procédé selon l'une des revendications précédentes, **caractérisé en ce que** la valeur effective de la différence de pression s'établit en fonction de la valeur de consigne de la différence de pression et de la position du clapet de freinage (12).

7. Procédé selon l'une des revendications précédentes, **caractérisé en ce que** lors d'un freinage moteur, la valeur effective de la pression de suralimentation s'établit par l'intermédiaire de la valeur de consigne de la pression de suralimentation (PL) et d'au moins un organe de régulation (17, 5) prévu sur la turbine de gaz d'échappement (8) et/ou dans le système d'aspiration (2).

8. Ensemble de frein moteur pour moteur à combustion interne de véhicule automobile, l'ensemble de frein moteur présentant
un système d'aspiration (2), un système (3) de gaz d'échappement, des soupapes de changement des gaz prévues sur le moteur à combustion interne, une suralimentation entraînée par les gaz d'échappement au moyen d'au moins un turbocompresseur (7) intégré dans le système (3) de gaz d'échappement et le système d'aspiration (2) ainsi qu'un dispositif de frein moteur,
le dispositif de frein moteur présentant un frein à décompression agissant sur au moins une soupape d'échappement des soupapes de changement de gaz, asservi à la contre-pression exercée par les gaz d'échappement et dépendant de cette dernière, ainsi qu'un clapet de freinage (12) disposé dans le système (3) de gaz d'échappement et retenant les gaz d'échappement,
**caractérisé en ce que**
lorsque le moteur fonctionne en frein moteur (B), le clapet de freinage (12) du système (3) de gaz d'échappement et la pression de suralimentation (PL) du $é du moteur (1) à combustion interne sont commandés par l'intermédiaire d'un régulateur (20) de pression de suralimentation dépendant de la puissance de freinage demandée et d'un régulateur (21) de différence de pression qui forme une différence de pression à partir de la contre-pression (PA) exercée par les gaz d'échappement et de la pression de suralimentation (PL).

9. Ensemble de frein moteur selon la revendication 8, **caractérisé en ce que** le clapet de freinage (12) est disposé en amont d'une turbine de gaz d'échappement (8) du turbocompresseur (7).

10. Ensemble de frein moteur selon les revendications 8 ou 9, **caractérisé en ce qu'**au moins un organe de commande (5, 17) qui agit sur la pression de suralimentation dans le système d'aspiration est prévu.

11. Ensemble de frein moteur selon la revendication 10, **caractérisé en ce que** l'organe de commande prévu sur le turbocompresseur (7) pour agir sur la pression de suralimentation (PL) dans le système d'aspiration (2) est une soupape de dérivation (17) et/ou un élément de guidage d'écoulement d'une turbine de gaz d'échappement (8), en particulier un élément de guidage d'écoulement d'une turbine de gaz d'échappement (8) à géométrie variable de turbine.

12. Ensemble de frein moteur selon les revendications 10 ou 11, **caractérisé en ce que** l'organe de commande agissant sur la pression de suralimentation (PL) est un clapet d'étranglement (5) disposé dans le système d'aspiration (2) du moteur (1) à combustion interne.

13. Ensemble de frein moteur selon l'une des revendications 8 à 12, **caractérisé en ce que** les valeurs de consigne du $20 et/ou du $21 sont reprises dans des champs (20a, 21a, 21b) de lignes caractéristiques formées au moins en fonction du régime de rotation (n) du moteur (1) à combustion interne, de la demande (B) de freinage moteur et/ou des valeurs de la pression de suralimentation (PL) dans le système d'aspiration (2).

14. Véhicule doté d'un ensemble de frein moteur selon l'une des revendications 8 à 13.
